(19) **Europäisches Patentamt**
**European Patent Office**
**Office européen des brevets**

(11) **EP 2 584 388 B1**

(12) **EUROPEAN PATENT SPECIFICATION**

(45) Date of publication and mention
of the grant of the patent:
**19.09.2018 Bulletin 2018/38**

(51) Int Cl.:
***G02B 6/028*** (2006.01)

(21) Application number: **11306359.8**

(22) Date of filing: **20.10.2011**

(54) **Method of computing an effective bandwidth of a multimode fiber**

Verfahren zur Berechnung einer effektiven Bandweite einer Multimodusfaser

Procédé pour calculer une bande passante efficace d'une fibre multimodale

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2013 Bulletin 2013/17**

(73) Proprietor: **Draka Comteq BV**
**1083 HJ Amsterdam (NL)**

(72) Inventors:
• **Molin, Denis**
**91210 Draveil (FR)**
• **Sillard, Pierre**
**78150 Le Chesnay (FR)**
• **Bigot-Astruc, Marianne**
**91460 Marcoussis (FR)**

(74) Representative: **Algemeen Octrooi- en Merkenbureau B.V.**
**P.O. Box 645**
**5600 AP Eindhoven (NL)**

(56) References cited:
**EP-A1- 2 144 096**

• **RICK PIMPINELLA ET AL: "Correlation of BER Performance to EMBc and DMD Measurements for Laser Optimized Multimode Fiber", INTERNET CITATION, 1 January 2007 (2007-01-01), pages 1-6, XP007915802, Retrieved from the Internet: URL:http://www.panduit.com/stellent/groups /mpm-op/documents/technicalpape r/cmscont_033699.pdf**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to methods of computing an effective bandwidth of a multimode fiber, and more particularly to methods of computing an effective bandwidth which is the more representative possible of the power penalty at a given bit error rate of the multimode fiber when implemented in an optical communication system.

BACKGROUND OF THE INVENTION

Multimode fiber is successfully used in high-speed data networks together with high-speed sources that are typically using transversally multimode vertical cavity surface emitting lasers more simply called VCSELs. The bit rate was mainly limited to 10 Gigabits per second (Gbps) for an Ethernet link or even 14 Gbps for a Fiber Channel link, and the reach was generally kept below 400m and more often below 100m.

In order to satisfy more drastic constraints of larger data centers, and in order to comply with the ever increasing bandwidth demand, such data networks have to cope with chromatic dispersion impairments. Those chromatic dispersion impairments depend on the spectral width of the source that is generally transversally multimode. The larger the spectral width is, the larger the chromatic dispersion impairments are.

Optical links having a length exceeding 400m, e.g. of 550m, and working at least at 10Gbps, for spectrally wide VCSELs, VCSELs operating at 25Gbps are expected to be spectrally larger than those working at 10Gbps but they are not commercialized yet, will be much more affected by the chromatic dispersion than optical links having a shorter length of about 300m and working at a bit rate of 10Gbps. The longer the length of the optical link and the higher the data bit rate of the optical link are, the more affected by chromatic dispersion the optical link is. For optical links of long length and/or high bit rate, it becomes really interesting to mitigate chromatic dispersion. Two options can be considered to mitigate chromatic dispersion. Either spectrally narrow sources are used, or chromatic dispersion is compensated for.

Since spectrally narrow sources, meaning single or quasi-single mode sources, are costly, compensating for chromatic dispersion within the multimode fiber itself appears to be a cheaper solution. The compensation of the chromatic dispersion in multimode fiber is partial and is based on the interaction between the chromatic and the modal dispersion. Basically, it has been shown that for perfect alpha ($\alpha$) profiles, multimode fibers exhibiting a alpha slightly below the optimum for a given operating wavelength partially compensate for the chromatic dispersion inherent to the spectral width of typical transversally multimode light sources.

However, in practice, the refractive index profile is not accurately enough controlled to produce only fiber with such desired feature. As a consequence, a differential mode delay (DMD) measurement is performed on all multimode fibers to assess their modal dispersion, and then a fiber selection based on the DMD plot is performed. Again, it is not feasible to accurately assess the alpha of a fiber from its DMD plot with enough accuracy for this purpose since actually, in a multimode fiber production, multimode fibers do not exhibit a perfect alpha profile and generally exhibit complex DMD patterns.

In a first prior art, "Correlation of BER Performance to EMBc and DMD Measurements for Laser Optimized Multimode Fiber" by Pimpinella, R. et.al., an effective modal bandwidth (EMBc) is computed. This computation assesses modal bandwidths only, so it does not assess the bandwidth resulting of the interaction of the chromatic and modal dispersions. Effective modal bandwidth is computed using a weighted sum of the traces recorded for different offset launches over the whole core radius - meaning the DMD plot, to calculate temporal responses of VCSEL launches. The weight coefficients are called weight function: at each offset launch corresponds a given weight. A drawback of first prior art is that computed effective modal bandwidth is less and less representative of power penalty at a given bit error rate, when length of optical link and/or data bit rate of optical link increase.

In a second prior art, for example described in European application EP2144096, the DMD pattern is modified to partly account for the modal and chromatic dispersion interaction and effective bandwidth is then computed with this modified DMD pattern, by using similar weight functions used for EMBc calculations. This second prior art solution works well when multimode fibers are close to perfect alpha and for simple DMD pattern. However, when multimode fibers start to move away from perfect alpha profiles and/or to present complex DMD pattern, computed effective bandwidth becomes less representative of power penalty at a given bit error rate.

In a third prior art, for example described in US application US2010/0315620, multimode fibers are selected when they exhibit a negative peak delay difference between a first radius and a larger radius. Among drawbacks of this third prior art, there are very sensitive measurements and results not representative enough of multimode fiber performances, especially when the DMD pattern becomes complex.

## SUMMARY OF THE INVENTION

The object of the present invention is to alleviate at least partly the above mentioned drawbacks.

More particularly, the invention aims to make computed effective bandwidth more representative of power penalty at a given bit error rate, than the computed bandwidth or parameter of the various prior arts.

According to some embodiments of the invention, to compute more representative effective bandwidth for multimode fiber, instead of using a single weight function dedicated as a whole to the light launched into the multimode fiber, the single weight function being applied to a DMD plot offset in time, it is proposed to use several different weight functions respectively dedicated to different transverse modes of the light launched into the multimode fiber, each different weight function being applied to a DMD plot offset in time.

The effective bandwidth computed according to some embodiments of the invention is better correlated to system performances, allowing a more accurate and secure multimode fiber selection, depending on features of the optical link, in particular its length and its data bit rate. This effective bandwidth computed is much more representative of the power penalty at a given bit error rate with different subsets of weighting coefficients respectively depending on different transverse modes of launched laser light than it would be with a single set of weighting coefficients. A subset of weighting coefficients is a sample of a weighting function.

According to some embodiments of the invention, another parameter, representative of fiber power penalty at a given bit error rate, for example the fiber transfer function, can be computed. The multimode fiber will be used in an optical link itself included in an optical system. Introduction of this multimode fiber in optical system will bring a penalty in optical system performance to transmit a signal. The computed parameter will be representative of this fiber penalty.

This object is achieved with a method of assessing power penalty at a given bit error rate of a multimode fiber, comprising at least a step of differential mode delay measurement, measuring a set of elementary fiber responses corresponding respectively to different offset launches of light over the core radius into multimode fiber, a step of generating a global fiber response by applying, to the set of elementary fiber responses, a set of weighting coefficients and time delays respectively depending on the different offset launches of the elementary fiber responses, a step of computing a parameter representative of a fiber power penalty from the global fiber response, wherein, in the step of generating a global fiber response, the set of weighting coefficients includes several subsets of weighting coefficients being time delayed relatively to one another, with at least one relative time delay that is not set to zero, weighting coefficients of each subset respectively depending on the different offset launches of the elementary fiber responses.

Preferred embodiments comprise one or more of the following features:

- the computed parameter representative of a fiber power penalty is an effective bandwidth of a multimode fiber.
- each subset of weighting coefficients is applied, to the same set of elementary fiber responses, to generate a partial fiber response corresponding to only one transverse mode of a laser source, - a time delay is applied to each partial fiber response corresponding to only one transverse mode of a laser source, - said global fiber response is built as a sum of the different delayed partial fiber responses.
- the respective time delays are computed as the products of the respective differences between wavelengths of a laser source and central wavelength of the laser source multiplied by the chromatic dispersion of the fiber.
- weighting coefficients and time delays have been chosen so that spectrum width Root Mean Square of said laser source is more than 0.2nm, preferably more than 0.3nm, more preferably more than 0.4nm, even more preferably more than 0.6nm.
- central wavelength of laser source is comprised in a spectral range of 840nm-860nm.
- difference between maximal wavelength and minimal wavelength of said laser source is more than 0.6nm, preferably more than 1nm, more preferably more than 1.5nm.
- a weighting function corresponding to the interpolation, between discreet weighting coefficients, of a subset of weighting coefficients, the areas under the respective weighting functions are respectively proportional to the powers of their corresponding wavelengths of said laser source.
- said set of weighting coefficients includes at least four said subsets of weighting coefficients.
- said set of weighting coefficients includes at most ten said subsets of weighting coefficients.
- weighting coefficients have been earlier obtained through numerical optimization including the iteration of calculation steps, for each transverse mode of launched light corresponding to a subset of weighting coefficients, of a difference between simulated and measured launched light power distribution among fiber modes, performed until minimization of weighted sum of calculated differences, relative weighting of calculated differences corresponding to relative emitting power of corresponding transverse modes of launched light.
- representative parameter of fiber penalty is computed several times with different said sets of weighting coefficients and associated time delays corresponding to different laser sources, and wherein either the worse computed parameter is kept or the 5 percentile worse parameter is kept.
- a fiber selection is made depending on the value of said computed parameter.

- said computed parameter is an effective bandwidth, and wherein fiber selection keeps fibers presenting an effective bandwidth of more than 3000 MHz-km at 850nm, preferably of more than 3500 MHz-km at 850nm, more preferably of more than 4000 MHz-km at 850nm.
- the differential mode delay measurements are performed with a 1$\mu$m step, preferably with a 0.5$\mu$m step.
- the fiber core radius is more than 10$\mu$m, preferably more than 20$\mu$m, more preferably more than 30$\mu$m, even more preferably more than 37$\mu$m.
- the fiber numerical aperture is more than 0.17, preferably more than 0.185, more preferably more than 0.25.
- an additional fiber selection is performed , additional fiber selection keeping only fibers presenting an effective modal bandwidth of more than a predetermined threshold.
- an additional fiber selection is performed , additional fiber selection keeping only fibers presenting an effective modal bandwidth of more than 4700MHz-km at 850nm.

According to some embodiments of the invention, the weighting coefficients are preferably all zero or positive, and that the sum of each subset is strictly positive.

Further features and advantages of the invention will appear from the following description of embodiments of the invention, given as non-limiting examples, with reference to the accompanying drawings listed hereunder.

BRIEF DESCRIPTION OF THE DRAWINGS

Fig. 1 shows an example of an optical communication system including a multimode fiber.
Fig. 2 shows an example of intensity profile of different modes of a vertical cavity surface emitting laser source.
Fig. 3 shows an example of optical spectrum of a vertical cavity surface emitting laser source.
Fig. 4a and Fig. 4b respectively show examples of measured DMD plots for two different multimode fibers.
Fig. 5 shows an example of fiber mode power distribution induced by different modes of a vertical cavity surface emitting laser source.
Fig. 6 shows an example of a family of weighting functions representative of the fiber mode power distribution induced by the different modes of a vertical cavity surface emitting laser source of fig 5.
Fig. 7a to Fig. 7f show examples of comparison between a actual fiber mode power distribution and a fiber mode power obtained with weighting functions of figure 6, for six modes of a vertical cavity surface emitting laser source.
Fig. 8a to Fig. 8d show examples of comparison between on one side a measured correspondence between power penalty at a given bit error rate and minimum effective modal bandwidth on Fig 8a, effective bandwidth according to an embodiment of the invention on Fig 8b, effective bandwidth computed according to second prior art in Fib. 8c, and peak delays of third prior art in Fig. 8d, at a data bit rate of 10Gbps for a link length of 550m.
Fig. 9 shows an example of the different steps and substeps performed by an effective bandwidth computation method according to an embodiment of the invention.
Fig. 10 shows an example of the different steps performed to determine the weighting coefficients used by an effective bandwidth computation method according to an embodiment of the invention.

DETAILED DESCRIPTION OF THE INVENTION

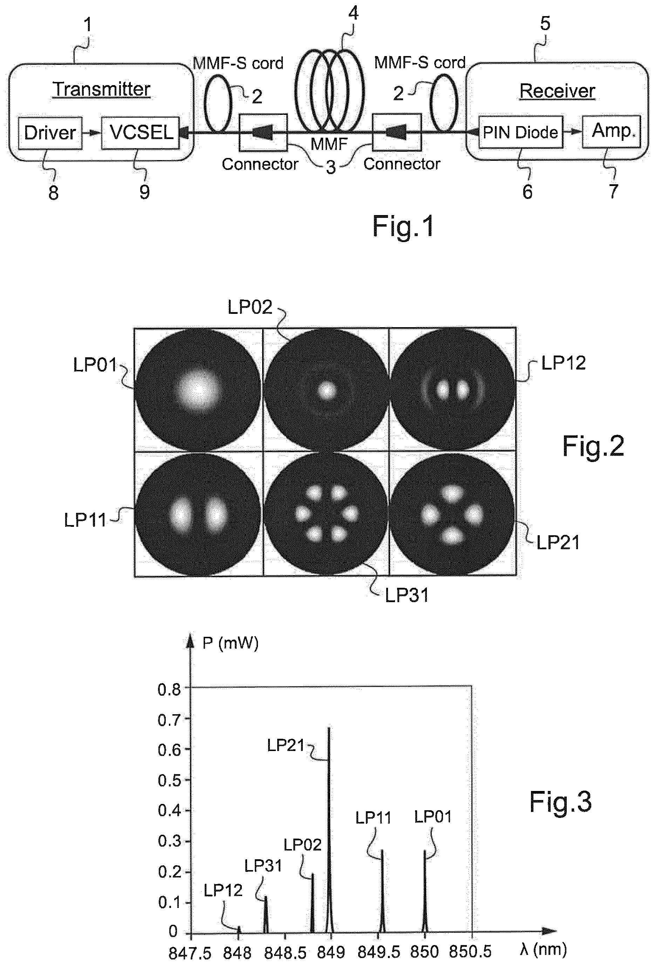

Fig. 1 shows an example of an optical communication system including a multimode fiber. A multi Gigabits Ethernet optical communication system successively comprises a driver 8 of a transmitter 1, a VCSEL source 9 of a transmitter 1, a launch cord 2, a connector 3, a multimode fiber 4 object of the present effective bandwidth computing method, a connector 3, a launch cord 2, a PIN diode 6 of a receiver 5, an amplifier 7 of a receiver 5. A digital signal at 10Gbps or 25Gbps is generated by the driver 8 that directly modulate the VCSEL source 9.

Fig. 2 shows an example of intensity profile of different modes of a vertical cavity surface emitting laser source. Such a high-speed VCSEL source 9, as in figure 1, is typically transversally multimode and longitudinally single mode. Here six different transverse modes, among most relevant modes because of the high proportion of total laser source power they contain, are represented. There are LP01 transverse mode, LP11 transverse mode, LP21 transverse mode, LP02 transverse mode, LP31 transverse mode, LP12 transverse mode.

As a consequence, each VCSEL mode will excite different fiber modes when coupled to a multimode fiber. This excitation can be mathematically described by an expansion as follows:

$$\psi_i^{VCSEL} = \sum_k a_{i,k} \psi_k^{fiber} + Loss$$

which is equation 1, where $\psi_i^{VCSEL}$ and $\psi_k^{fiber}$ are the $i^{th}$ and $k^{th}$ mode of respectively the VCSEL source 9 and the multimode fiber and $|a_{i,k}|^2$ is the coupled power of the $i^{th}$ VCSEL mode into the $k^{th}$ fiber mode.

Fig. 3 shows an example of optical spectrum of a vertical cavity surface emitting laser source. The distributed power P, expressed in mW, is plotted as a function of the wavelength $\lambda$, expressed in nm. Each VCSEL transverse mode exhibits its own wavelength. As a consequence, the optical spectrum of the VCSEL is discrete like represented in figure 3. In this example, most power is emitted through the LP21 transverse mode. Intermediate levels of power are distributed in LP11 transverse mode, in LP01 transverse mode and in LP02 transverse mode. Lower levels of power are distributed in LP31 transverse mode and in LP12 transverse mode.

Since VCSEL modes share the same gain, each VCSEL mode carries its own optical signal $s_i(t)$ despite being excited by the same electrical signal of the driver 8. For sake of convenience, the effect of the connectors can be neglected what is valid since all fibers, launch cords 2 and multimode fiber 4, in the link exhibit similar refractive index profile and since the connectors 3 can be considered as ideal.

Under this assumption, the optical wave excited by the $i^{th}$ VCSEL mode then travels through the fiber and is affected by the modal ($\beta_1$) and the chromatic ($\beta_2$) dispersion and attenuation $\alpha$. The output electromagnetic field $\psi_{out}$ can be expressed as follows:

$$\vec{\psi}_{out}(\omega) = \sum_k a_{i,k} \cdot \widetilde{H}_k(\omega, L) \cdot \widetilde{s}_i(\omega) \cdot \vec{\psi}_k^{fiber}$$

which is equation 2, where, $\omega = 2\pi c/\lambda$ and $\omega_i = 2\pi c/\lambda_i$, $\lambda_i$ is the wavelength of the $i^{th}$ VCSEL mode, and L is the fiber length, $\widetilde{s}_i$ is the Fourier transform of si, and $\widetilde{H}_k(\omega, L)$ is the transfer function of the k-th fiber mode.

$$\widetilde{H}_k(\omega, L) = e^{-\frac{\alpha_k \cdot L}{20}} \cdot e^{-\frac{\alpha_{k,BL}}{20}} \cdot e^{-i\beta_{k,0}L} \cdot e^{-i\beta_{k,1}\cdot(\omega-\omega_0)\cdot L} \cdot e^{-i\frac{\beta_{k,2}}{2}\cdot(\omega-\omega_0)^2 \cdot L}$$

where $\alpha_k$ is the linear attenuation of the k-th mode in dB/km, L the fiber length in km, $\alpha_{k,BL}$ is the indicental loss applied to the k-th mode (that can be bending loss), $\beta_{k,0}$ is the propagation constant, $1/\beta_{k,1}$ is the group velocity and $\beta_{k,2}$ is the group velocity dispersion of the k-th mode at $\lambda_i$.

Therefore, the optical wave that reaches the output of the fiber can be expressed as follows:

$$\left| s_i^{output}(t) \right|^2 = \sum_k \left| a_{i,k} \right|^2 \cdot \left| s_i\left( t + \beta_1^k(\omega_i) \cdot L \right) \right|^2$$

which is equation 3. If the effect of chromatic dispersion in equation 2 is neglected, since each VCSEL mode is spectrally narrow, and if the attenuation coefficient is neglected for sake of simplicity, knowing that a quadratic detector is used and that the detector area is sufficiently large so that the overlapping integral between fiber modes on the detector surface is 0 if modes are different:

$$\iint_{detector} \psi_i \cdot \psi_j^* \cdot dS = \begin{cases} 0 & if\ i \neq j \\ 1 & if\ i = j \end{cases}$$

The total signal is thus equal to the sum of all signals. So it can be derived:

$$\left| s^{output}(t) \right|^2 = \sum_i \left| s_i^{output}(t) \right|^2$$

which is equation 3.

Therefore:

$$\left|s^{output}(t)\right|^2 = \sum_i \sum_k \left|a_{i,k}\right|^2 \cdot \left|s_i\left(t + \beta_1^k(\omega_i)\cdot L\right)\right|^2$$

knowing that

$$\beta_1^k(\omega_i) \approx \beta_1^k(\omega_0) + \frac{\beta_2^k(\omega_0)}{2}(\omega_i - \omega_0)$$

where $\omega_0$ is the pulsation of the center wavelength of the spectrum and that the chromatic dispersion is the same for all the fiber modes:

$$\beta_2^k \approx \beta_2$$

$$\left|s^{output}(t)\right|^2 = \sum_i \sum_k \left|a_{i,k}\right|^2 \cdot \left|s_i\left(t + \beta_1^k(\omega_0)\cdot L + \frac{\beta_2(\omega_0)}{2}(\omega_i - \omega_0)\cdot L\right)\right|^2$$

it comes:                                                                                                          the delay to apply inside $s_i$ is therefore divided in two parts:

- the first relative to the modal dispersion only: $\quad \beta_1^k(\omega_0)$

- the second relative to the chromatic dispersion only: $\quad \dfrac{\beta_2(\omega_0)}{2}(\omega_i - \omega_0)$

The idea of the invention consists in providing $|a_{i,k}|^2$, through a the family of weight functions, and associated

delays $\quad \tau_i = \dfrac{\beta_2(\omega_0)}{2}(\omega_i - \omega_0)\cdot \beta_1^k(\omega_0) \quad$ define the modal dispersion assessed by the DMD plot as explained below.

Finally, the transfer function H($\omega$) of the multimode fiber under VCSEL excitation can be defined as follows:

$$\left|H(\omega)\right|^2 = \frac{\left|\tilde{s}_{out}(\omega)\right|^2}{\left|\tilde{s}_{in}(\omega)\right|^2} = \frac{\sum_i \sum_k \left|a_{i,k}\right|^2 e^{-j\left(\beta_1^k(\omega_0)\cdot L + \tau_i \cdot L\right)\cdot \omega}}{\sum_i \sum_k \left|a_{i,k}\right|^2} = \frac{1}{\sum_i \sum_k \left|a_{i,k}\right|^2} \cdot \sum_i \left(\sum_k \left|a_{i,k}\right|^2 e^{-j\left(\beta_1^k(\omega_0)\cdot L\right)\cdot \omega}\right)\cdot e^{-j\left(\tau_i \cdot L\right)\cdot \omega}$$

which is equation 4,
from which a bandwidth at -3dB can be computed that is called effective bandwidth.

$$|H(\omega)|^2 = \frac{\sum_i \sum_k |a_{i,k}|^2 \cdot e^{-j\left(\beta_1^k(\omega_0)\cdot L + \tau_i \cdot L\right)\cdot \omega}}{\sum_i \sum_k |a_{i,k}|^2}$$

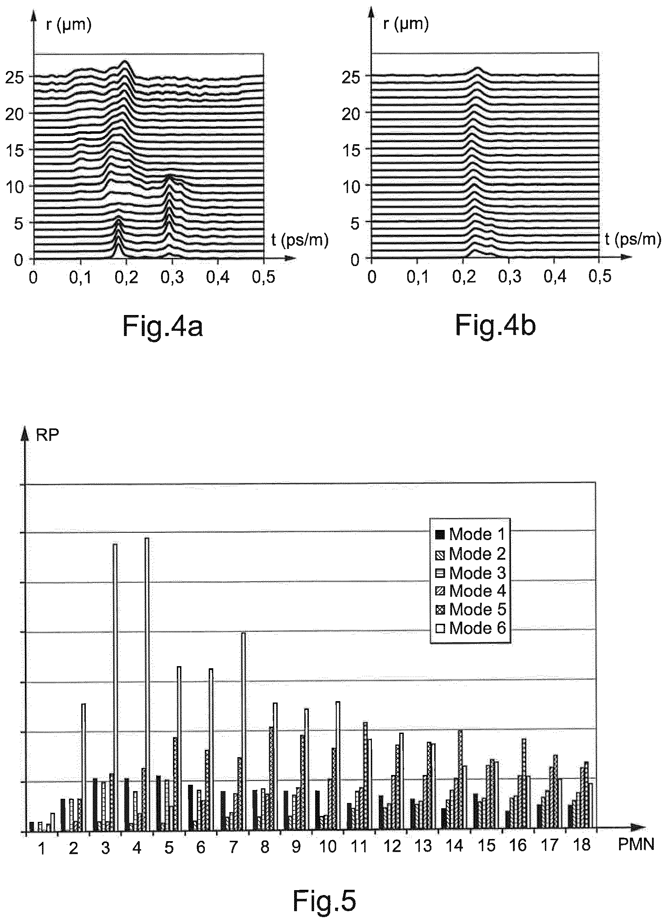

Fig. 4a and Fig. 4b respectively show examples of measured DMD plots for two different multimode fibers. The fiber response obtained with an offset launch r, that is to say the distance from multimode fiber core center where the light is launched into multimode fiber core, expressed in $\mu$m, is plotted as a function of time t, expressed in typically in ns (and eventually in ps/m when normalized by the fiber length). The differential mode delay measurement is a way of characterizing the modal properties of multimode fibers, in providing a cartography of the modal dispersion. It is now widely used by fiber manufacturers to assess performances of fibers dedicated to high-speed networks operating at 10Gbps and using VCSEL sources. DMD measurements are performed according to normalized procedures IEC 60793-1-49 & TIA-FOTP-220. Actually developped for the characterization of 50$\mu$m multimode fibers, this measurement method can be straightforwardly extended to any multimode fibers, especially with larger or narrower core size and or different numerical apertures.

An example of DMD measurement at 850nm is shown in figures 4a and 4b, for two different multimode fibers with a core radius of 50$\mu$m. DMD provides cartography of the modal dispersion across the multimode fiber radius. Indeed, each line on this plot corresponds to the power evolution as a function of time when a short laser pulse (20 ps to 1 ns) is launched, through a single mode fiber with 5$\mu$m mode field diameter at 850nm, at one specific position across the multimode fiber radius, called the offset launch on the graph.

The fiber response $H_r^{DMD}$ for each offset launch can be expressed as follows:

$$H_r^{DMD}(\omega) = \sum_k b_{r,k} \cdot \tilde{H}_k(\omega, L)$$

which is equation 5, where $|b_{r,k}|^2$ is the coupled power within the $k^{th}$ mode of the multimode fiber by the offset launch r during the DMD measurements.

Then weighting coefficients are introduced through parameters W(r,i) and $\tau_i$ to build a global fiber response from the DMD measurements:

$$H^{DMD}(\omega, \{W\}, \{\tau\}) = \sum_i \sum_r \sqrt{W(r,i)} \cdot e^{-j\tau_i \omega} \cdot H_r^{DMD}(\omega)$$

which is equation 6.

Weighting coefficients parameters W(r,i) are chosen such as:

$$\sum_r W(r,i) \cdot |b_{r,k}|^2 = |a_{i,k}|^2$$

which is equation 7, and $\tau_i$ such as:

$$\tau_i - \beta_1^1(\omega_{mes}) \approx \beta_1^1(\omega_i) - \beta_1^1(\omega_1) \approx \frac{\beta_2(\omega_0)}{2}(\omega_i - \omega_0)$$

which is equation 8.

Therefore, equation 6 is equivalent to equation 4.

Each $k^{th}$ fiber mode exhibits its own modal ($\beta_1^k$) and chromatic ($\beta_2^k$) dispersion that are related to the time delay $\tau(\lambda_0)$ expressed in m.s$^{-1}$ and C($\lambda_0$) expressed in ps/nm.km and computed at $\lambda_0$, typically the center wavelength of the VCSEL optical spectrum. It comes:

$$\beta_1^k(\lambda) = \tau(\lambda_0) + (\lambda - \lambda_0) \cdot 10^{-9} \cdot C(\lambda_0) \cdot 10^{-6}$$

which is equation 9, and

$$\beta_2^k(\lambda) \approx -C(\lambda_0) \cdot 10^{-6} \cdot \frac{\left(\lambda_0 \cdot 10^{-9}\right)^2}{2\pi c}$$

which is equation 10, when the wavelengths are expressed in nm, and c is the speed of light in m.s$^{-1}$.

Finally,

$$\tau_i \approx 1000 \cdot C(\lambda_0) \cdot (\lambda_i - \lambda_0) + cst$$

where $\tau_i$ is expressed in ps/m, C in ps/nm-km, and $\lambda_0$ and $\lambda_i$ in nm.

Fig. 5 shows an example of fiber mode power distribution induced by different modes of a vertical cavity surface emitting laser source. It is convenient to model multi Gigabit transmission systems and DMD measurements. Here the transmission at data bit rate of 10Gbps over a link length of 300m of a plurality of multimode fibers with a given transceiver has been modeled. The power distribution of the six different modes of laser source within the eighteen groups of the multimode fiber is shown on figure 5. Relative power RP is expressed as a function of the multimode fiber mode group number, also called principal mode number PMN, for each of the six different modes of laser source.

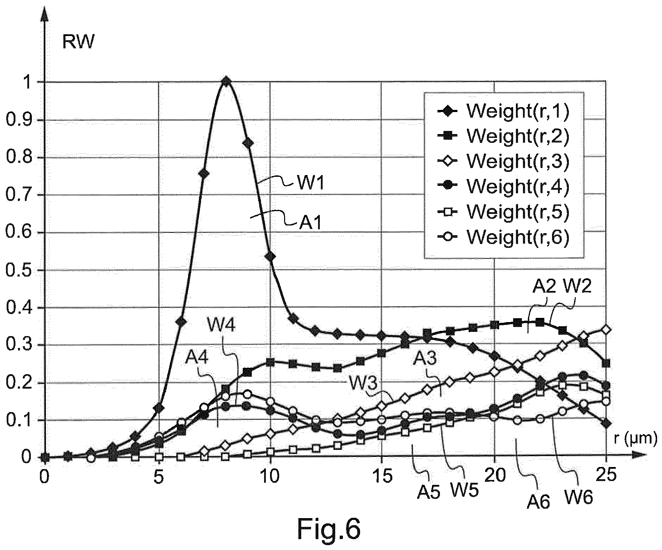

Fig. 6 shows an example of a family of weighting functions representative of the fiber mode power distribution induced by the different modes of a vertical cavity surface emitting laser source of fig 5. These weighting functions actually minimize

$$\sum_k \left| \sum_r W(r,i) \cdot \left| b_{r,k} \right|^2 - \left| a_{i,k} \right|^2 \right|^2 \quad \forall i$$

assuming $W(r,i) \geq 0$. This minimization can be perform using well-known algorithms like the least square method.

The relative weight RW of each weighting function is plotted as a function of the offset launch r expressed in $\mu$m. The VCSEL excitation can be approximated by several different weight functions W(r, i) represented in figure 6, one weight function per transverse mode of launched light, and a list of delays $\tau_i$ reported in table 1..

Here is table 1:

| $\tau_i$ (ps/m) | 0 | 0.034 | 0.077 | 0.09 | 0.128 | 0.15 |
|---|---|---|---|---|---|---|

These weight functions reproduce well the VCSEL excitation as shown in figure 6 that reports the mode power distribution actually induced by each VCSEL mode and the mode power distribution obtained by the weighted sum of offset launch excitation during the DMD measurements.

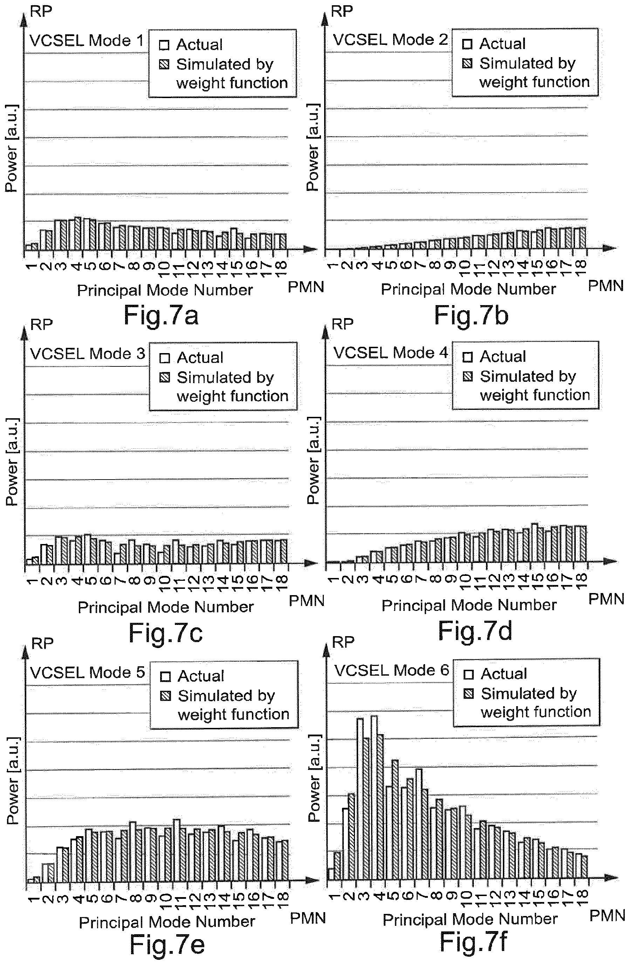

Each weighting function W(r, 1) to W(r, 6) (also called W1 to W6) are discreet weighting coefficients, of a subset of weighting coefficients, the respective sums of W(r, 1) to W(r, 6) are respectively proportional to the powers of their corresponding transverse modes 1 to 6 of light launched into multimode fiber by laser source. Fig. 7a to Fig. 7f show examples of comparison between a measured fiber mode power distribution and a fiber mode power simulated with weighting functions of figure 6, for six modes of a vertical cavity surface emitting laser source. Relative power RP is expressed as a function of the multimode fiber mode group number, also called principal mode number PMN, for each of the six different modes of laser source. Measured and simulated power distributions are very close to each other, and that is true for all six different modes of laser source.

Basically, to compute the effective bandwidth it is proceeded as follows:

- first the temporal response corresponding to each VCSEL mode is computed

$$S_i(t) = \sum_r W(r,i) \cdot s_r(t)$$

where $s_r$ are the temporal responses recorded for each offset launch during the DMD measurements, $s_{0\mu m}$ is the center launch, $s_{1\mu m}$ with a 1$\mu$m offset, ...
- second a temporal delay between all VCSEL modes is applied $S_i(t - \tau_i)$ if $\tau_i > 0$, the $(t, S_i(t))$ curve is shifted to the right
- the i VCSEL mode responses are summed to get a VCSEL mode response

$$\sum_i S_i(t - \tau_i)$$

the -3dB bandwidth of the transfer function which is finally computed is defined as follows:

$$H(\omega) = \frac{TF\left(\sum_i S_i(t - \tau_i)\right)}{TF\left(S_{Pulse}(t)\right)}$$

where $S_{pulse}$ is the reference pulse used for the DMD measurements.

As for experimental conditions are concerned, bit error rate measurements have been performed on real fibers. The weighting functions and the associated weighting coefficients have been derived theoretically for a given VCSEL based source exhibiting a similar encircled flux and spectral width. The weighting functions are reported figure 6 in and the delays $\tau_i$ in table 1.

$R^2$ is the correlation coefficient between measured and fitted values assuming a power law ($y=ax^b$).

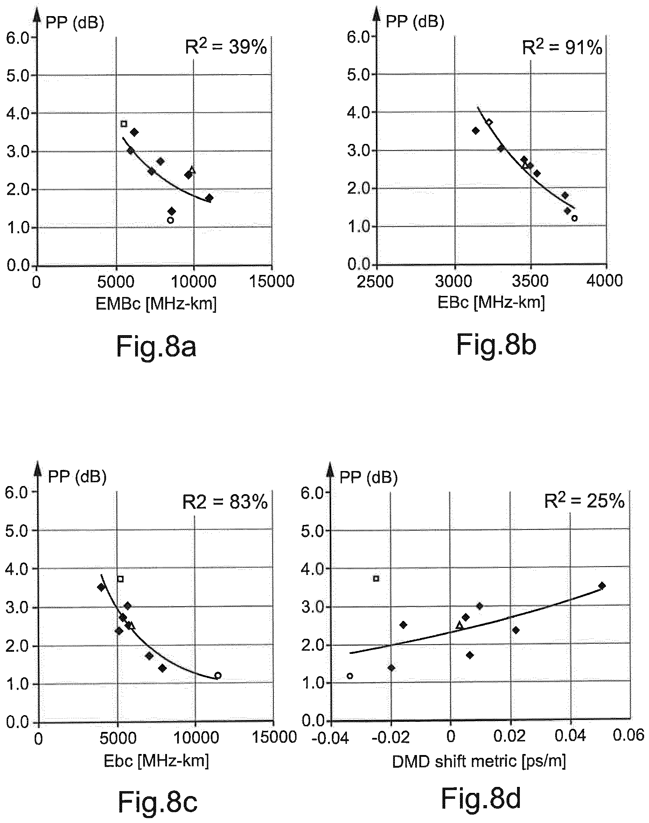

Fig. 8a to 8d show examples of comparison between on one side a measured correspondence between power penalty at a given bit error rate and minimum effective modal bandwidth on Fig 8a, effective bandwidth on Fig 8b, effective bandwidth computed according to prior art in Fib. 8c, and peak delays of prior art in Fig. 8d, at a data bit rate of 10Gbps for a link length of 550m.

At 10Gbps, a 83% correlation for best prior art can be seen, which is good, to be compared to a 91% correlation which is excellent for an embodiment according to our invention. Embodiment of the invention shows a clearly better correlation between measured and simulated values than first prior art.

Figure 8a shows a 39% correlation for first prior art method, which is low and which is much lower than the 91% correlation of method according to embodiment of the invention shown on figure 8b.

Figure 8c shows a 83% correlation for second prior art method, which is good, but which is not as good as the 91% correlation of method according to embodiment of the invention.

Figure 8d shows a 25% correlation for third prior art method, which is quite low, and which is much lower than the very good 91% correlation of method according to embodiment of the invention.

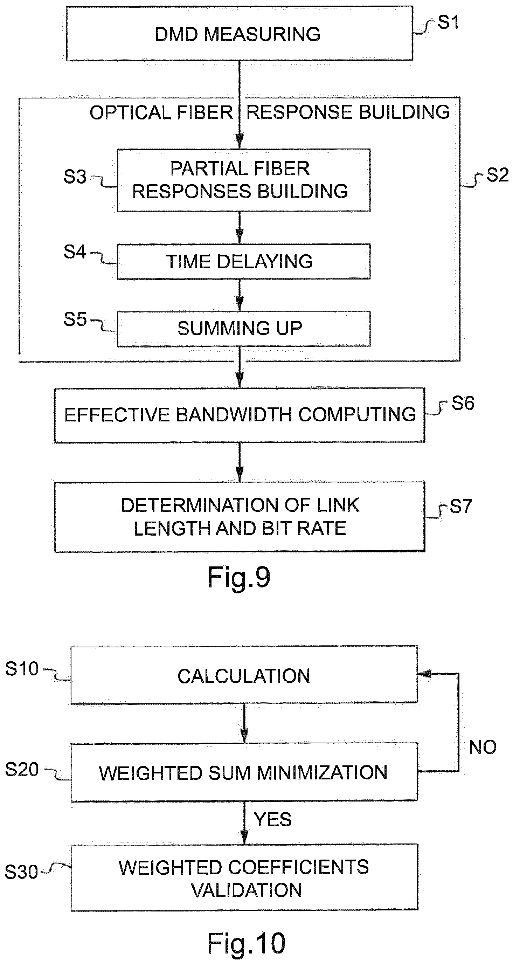

Fig. 9 shows an example of the different steps and substeps performed by an effective bandwidth computation method according to an embodiment of the invention. The computing method comprises a step S1 of DMD measuring, a step S2 of global fiber response building, itself subdivided in three substeps S3 of partial fiber responses building, S4 of delaying partial responses to one another, and S5 of summing up delayed partial responses, a step S6 of effective bandwidth computing, a step S7 of link length and data bit rate determination. In step S1, a differential mode delay measurement is performed for the multimode fiber. A set of elementary fiber responses corresponding respectively to different offset launches of light into multimode fiber is measured. Laser light is launched from the output of a single mode fiber to the input of the multimode fiber to be characterized, at different distances from the center of multimode fiber core.

In step S2, a global fiber response is built by performing successively the three substeps S3, S4 and S5. Therefore, in a preferred option, in a substep S3, each subset of weighting coefficients is applied, to the same set of elementary fiber responses, to build a partial fiber response corresponding to only one transverse mode of launched light. In a substep S4, different temporal delays are implemented between the partial responses. In a substep S5, the global fiber response is built as the sum of the delayed partial responses.. All three functional operations of building of partial fiber responses, of delaying and of summing up delayed partial responses to build global fiber response can be done in one single calculation. In step S6, the effective bandwidth is computed from the global fiber response. In step S7, a multi gigabits optical communication link, for example an Ethernet optical communication link, whose length and bit rate depend on said computed effective bandwidth is determined, the higher said computed effective bandwidth is, the longer said link length and the higher the bit rate are. Afterwards, the multimode fiber can then included in the chosen multi gigabits Ethernet optical communication link whose length and bit rate depended on said computed effective bandwidth.

Step S2 can be computed for a plurality of multi-subsets weighting functions in order to account for a plurality of VCSEL types leading to as many effective bandwidths in step S6. Then a reasonable worst case effective bandwidth, like the minimum effective bandwidth or a 5% fractile can be use to guarantee safe transmissions for a given length & bit rate multi-gigabits optical link.

Fig. 10 shows an example of the different steps performed to determine the weighting coefficients used by an effective bandwidth computation method according to an embodiment of the invention. Weighting coefficients are obtained through numerical optimization including the iteration of calculation steps S10, for each transverse mode of launched light corresponding to a subset of weighting coefficients, of a difference between simulated and measured launched light power distribution among fiber modes, performed until minimization of weighted sum of calculated differences, relative weighting of calculated differences corresponding to relative emitting power of corresponding transverse modes of launched light. The mode power distribution induced by each VCSEL mode excitation or by the offset launches during the DMD measurements within the fiber can be derived exclusively by modeling assuming or derived from near fields measurements.

In step S20, if weighted sum is acknowledged as minimal, then we go to step S30 where the complete set of subsets of weighting coefficients is validated to be used in the effective bandwidth computing method according to the invention. In step S20, if weighted sum is not acknowledged as minimal, then we go back to step S10.

In calculation step S10, one or more of following rules are preferably respected. One rule is that, a weighting function corresponding to the extrapolation, between discreet weighting coefficients, of a subset of weighting coefficients, the surfaces under the respective weighting functions are respectively proportional to the powers of their corresponding transverse modes of launched light. Another rule is that, the different subsets of weighting coefficients are time shifted to one another, time shifts of the different subsets respectively depending on the different fiber modal dispersions at the different wavelengths of the different transverse modes of launched light. Still another rule is that relative emitting power of different transverse modes of launched light is determined by an average of several different vertical cavity surface emitting laser sources, preferably by an average of at least five different sources, more preferably by an average of at least ten different sources.

The number of different modes of the launched light into the multimode fiber which are taken into account for determining weighting coefficients depends on the number of VCSEL modes actually dominant under operation, meaning the number of VCSEL modes that emits the main part of the power. The idea of the invention is to use as many weight functions as there are VCSEL modes. This number varies from two up to eight typically, but may exceed eight leading to as many subsets in the weight functions. More preferably, several families of weighting functions and associated delays can be used to account for a plurality of VCSELs, with a particular attention paid to the minimum or the median effective bandwidth.

The invention has been described with reference to preferred embodiments. However, many variations are possible within the scope of the invention. The invention is defined by the appended claims.

## Claims

1. Method of assessing a power penalty at a given bit error rate of a multimode fiber (4), comprising at least:

   - a step (S1) of differential mode delay measurement, measuring a set of elementary fiber responses corresponding respectively to different offset launches (r) of light over the core radius into multimode fiber (4),
   - a step (S2) of generating a global fiber response by applying, to the set of elementary fiber responses, a set of weighting coefficients and time delays respectively depending on the different offset launches (r) of the elementary fiber responses, and
   - a step (S5) of computing a parameter representative of a fiber power penalty from the global fiber response,

   wherein, in the step (S2) of generating a global fiber response, the set of weighting coefficients includes several subsets (W(r, 1) to W(r, 6)) of weighting coefficients that are time delayed relatively to one another, and wherein at least one relative time delay that is not set to zero, and wherein the weighting coefficients of each subset respectively depend on the different offset launches (r) of the elementary fiber responses and wherein:

   each subset (W(r, 1) to W(r, 6)) of weighting coefficients is applied, to the same set of elementary fiber responses, to generate a partial fiber response, wherein each fiber response corresponds to only one transverse mode of a transversely multimode laser diode (S3), wherein different subsets of weighting coefficients correspond to different transversal modes of the laser diode, and wherein

a time delay is applied to each partial fiber response corresponding to only one transverse mode of a laser source (S4), and

said global fiber response is built as a sum of the different delayed partial fiber responses (S5) and wherein the respective time delays are computed as the products of the respective differences between wavelengths of the respective transverse modes of the laser source and central wavelength of the laser source multiplied by the chromatic dispersion of the fiber.

2. Method according to claim 1, wherein the computed parameter representative of a fiber power penalty is an effective bandwidth of the multimode fiber (4).

3. Method according to claim 1, wherein weighting coefficients and time delays are such that the spectrum width Root Mean Square (RMS) of said laser source is more than 0.2nm, preferably more than 0.3nm, more preferably more than 0.4nm, even more preferably more than 0.6nm.

4. Method according to claim 1 or 3, wherein the central wavelength of the laser source is comprised in a spectral range of 840nm-860nm.

5. Method according to any of claims 1 to 4, wherein a difference between the maximal wavelength and the minimal wavelength of said laser source is more than 0.6nm, preferably more than 1nm, more preferably more than 1.5nm.

6. Method according to any of claims 1 to 5, wherein, a weighting function (Wi) corresponding to the interpolation, between discreet weighting coefficients, of a subset (W(r, 1) to W(r, 6)) of weighting coefficients, the areas (Ai) under the respective weighting functions (Wi) are respectively proportional to the powers of their corresponding wavelengths of said laser source.

7. Method according to any of preceding claims, wherein said set of weighting coefficients includes at least four said subsets (W(r, 1) to W(r, 6)) of weighting coefficients.

8. Method according to any of preceding claims, wherein said set of weighting coefficients includes at most ten said subsets (W(r, 1) to W(r, 6)) of weighting coefficients.

9. Method according to any of preceding claims, wherein the weighting coefficients (W(r, i)) have been earlier obtained through numerical optimization including the iteration of calculation steps (S10), for each transverse mode (LPxy) of launched light corresponding to a subset (W(r, 1) to W(r, 6)) of weighting coefficients, of a difference between simulated and measured launched light power distribution among fiber modes, performed until minimization of weighted sum of calculated differences, relative weighting of calculated differences corresponding to relative emitting power of corresponding transverse modes (LPxy) of launched light.

10. Method according to any of precedent claims, wherein representative parameter of fiber penalty is computed several times with different said sets of weighting coefficients and associated time delays corresponding to different laser sources, and wherein either the worst computed parameter is kept or the 5 percentile worst parameter is kept.

11. Method according to any of precedent claims, wherein a fiber selection is made based on the value of said computed parameter.

12. Method according to claim 11, wherein said computed parameter is an effective bandwidth, and wherein fiber selection keeps fibers presenting an effective bandwidth of more than 3000 MHz-km at 850nm, preferably of more than 3500 MHz-km at 850nm, more preferably of more than 4000 MHz-km at 850nm.

13. Method according to any of precedent claims, wherein the differential mode delay measurements are performed with a 1$\mu$m step, preferably with a 0.5$\mu$m step.

14. Method according to any of precedent claims, wherein the fiber core radius is more than 10$\mu$m, preferably more than 20$\mu$m, more preferably more than 30$\mu$m, even more preferably more than 37$\mu$m.

**15.** Method according to any of precedent claims, wherein the fiber numerical aperture is more than 0.17, preferably more than 0.185, more preferably more than 0.25.

**16.** Method according to any of precedent claims, wherein an additional fiber selection is performed, additional fiber selection keeping only fibers presenting an effective modal bandwidth of more than a predetermined threshold.

**17.** Method according to claim 16, wherein an additional fiber selection is performed, additional fiber selection keeping only fibers presenting an effective modal bandwidth of more than 4700MHz-km at 850nm.

**Patentansprüche**

**1.** Verfahren zur Bewertung der Leistungseinbuße bei einer gegebenen Bitfehlerrate einer Multimodenfaser (4), umfassend mindestens:

- einen Schritt (S1) der Differenzmodusverzögerungsmessung, Messen eines Satzes von Elementarfaserantworten, die jeweils verschiedenen Offset-Einkopplungen (r) von Licht über den Kernradius in eine Multimodenfaser (4) entsprechen,
- einen Schritt (S2) zum Erzeugen einer globalen Faserantwort durch Anwenden eines Satzes von Gewichtungskoeffizienten bzw. Zeitverzögerungen auf den Satz von elementaren Faserantworten in Abhängigkeit von den verschiedenen Offset-Einkopplungen (r) der elementaren Faserantworten, und
- einen Schritt (S5) zum Berechnen eines Parameters repräsentativ für eine Faserleistungseinbuße aus der globalen Faserantwort,

wobei in dem Schritt (S2) zum Erzeugen einer globalen Faserantwort der Satz von Gewichtungskoeffizienten mehrere Teilmengen (W(r, 1) bis W(r, 6)) von Gewichtungskoeffizienten umfasst, die relativ zueinander zeitverzögert sind, und wobei mindestens eine relative Zeitverzögerung, die nicht auf Null gesetzt ist, und wobei die Gewichtungskoeffizienten jeder Teilmenge jeweils von den verschiedenen Offset-Einkopplungen (r) der elementaren Faserantworten abhängen und wobei:

jede Teilmenge (W(r, 1) bis W(r, 6)) von Gewichtungskoeffizienten auf denselben Satz von elementaren Faserantworten angewendet wird, um eine partielle Faserantwort zu erzeugen, wobei jede Faserantwort nur einem transversalen Modus einer transversalen Multimode-Laserdiode (S3) entspricht, wobei verschiedene Teilmengen von Gewichtungskoeffizienten unterschiedlichen transversalen Moden der Laserdiode entsprechen, und wobei eine Zeitverzögerung auf jede Teilfaserantwort, die nur einem transversalen Modus einer Laserquelle (S4) entspricht, angewendet wird und die globale Faserantwort als Summe der verschiedenen verzögerten Teilfaserantworten (S5) gebildet wird und wobei die jeweiligen Zeitverzögerungen als Produkte der jeweiligen Unterschiede zwischen den Wellenlängen der jeweiligen transversalen Moden der Laserquelle und der zentralen Wellenlänge der Laserquelle multipliziert mit der chromatischen Dispersion der Faser berechnet werden.

**2.** Verfahren nach Anspruch 1, wobei der berechnete Parameter repräsentativ für eine Faserleistungseinbuße eine effektive Bandbreite der Multimodenfaser (4) ist.

**3.** Verfahren nach Anspruch 1, wobei Gewichtungskoeffizienten und Zeitverzögerungen so sind, dass die spektrale Breite des Root Mean Square (RMS) der Laserquelle mehr als 0.2 nm, bevorzugt mehr als 0.3 nm, weiter bevorzugt mehr als 0.4 nm, noch weiter bevorzugt mehr als 0.6 nm beträgt.

**4.** Verfahren nach Anspruch 1 oder 3, wobei die zentrale Wellenlänge der Laserquelle in einem Spektralbereich von 840nm-860nm liegt.

**5.** Verfahren nach einem der Ansprüche 1 bis 4, wobei eine Differenz zwischen der maximalen Wellenlänge und der minimalen Wellenlänge der Laserquelle mehr als 0.6 nm, bevorzugt mehr als 1 nm, weiter bevorzugt mehr als 1.5 nm beträgt.

**6.** Verfahren nach einem der Ansprüche 1 bis 5, wobei eine Gewichtungsfunktion (Wi), die der Interpolation zwischen diskreten Gewichtungskoeffizienten einer Teilmenge (W(r, 1) bis W(r, 6)) von Gewichtungskoeffizienten entspricht, die Flächen (Ai) unter den jeweiligen Gewichtungsfunktionen (Wi) jeweils proportional zu den Leistungen ihrer entsprechenden Wellenlängen der Laserquelle sind.

7. Verfahren nach einem der vorhergehenden Ansprüche, wobei der Satz von Gewichtungskoeffizienten mindestens vier der Teilmengen (W(r, 1) bis W(r, 6)) von Gewichtungskoeffizienten enthält.

8. Verfahren nach einem der vorhergehenden Ansprüche, wobei der Satz von Gewichtungskoeffizienten höchstens zehn der Teilmengen (W(r, 1) bis W(r, 6)) von Gewichtungskoeffizienten enthält.

9. Verfahren nach einem der vorhergehenden Ansprüche, wobei die Gewichtungskoeffizienten (W(r, i)) vorher erhalten wurden durch numerische Optimierung einschließlich der Iteration von Berechnungsschritten (S10) für jeden transversalen Modus (LPxy) des gestarteten Lichts entsprechend einer Teilmenge (W(r, 1) bis W(r, 6)) von Gewichtungskoeffizienten, einer Differenz zwischen simulierter und gemessener gestarteter Lichtleistungsverteilung zwischen Fasermoden, durchgeführt bis zur Minimierung der gewichteten Summe der berechneten Differenzen, relative Gewichtung der berechneten Differenzen entsprechend der relativen Sendeleistung der entsprechenden transversalen Moden (LPxy) des gestarteten Lichts.

10. Verfahren nach einem der vorhergehenden Ansprüche, wobei ein repräsentativer Parameter der Fasereinbuße mehrmals mit unterschiedlichen Sätzen von Gewichtungskoeffizienten und zugehörigen Zeitverzögerungen, die verschiedenen Laserquellen entsprechen, berechnet wird und wobei entweder der schlechteste berechnete Parameter beibehalten wird oder der schlechteste 5-Perzentil-Parameter beibehalten wird.

11. Verfahren nach einem der vorhergehenden Ansprüche, wobei eine Faserauswahl auf der Grundlage des Wertes des berechneten Parameters getroffen wird.

12. Verfahren nach Anspruch 11, wobei der berechnete Parameter eine effektive Bandbreite ist, und wobei die Faserauswahl Fasern mit einer effektiven Bandbreite von mehr als 3000 MHz-km bei 850 nm, bevorzugt von mehr als 3500 MHz-km bei 850 nm, weiter bevorzugt von mehr als 4000 MHz-km bei 850 nm, hält.

13. Verfahren nach einem der vorhergehenden Ansprüche, wobei die Differenzmodusverzögerungsmessungen mit einem 1 $\mu$m-Schritt, bevorzugt mit einem 0.5 $\mu$m-Schritt, durchgeführt werden.

14. Verfahren nach einem der vorhergehenden Ansprüche, wobei der Faserkernradius mehr als 10$\mu$m, bevorzugt mehr als 20$\mu$m, weiter bevorzugt mehr als 30$\mu$m, noch weiter bevorzugt mehr als 37$\mu$m beträgt.

15. Verfahren nach einem der vorhergehenden Ansprüche, wobei die numerische Apertur der Faser mehr als 0.17, bevorzugt mehr als 0.185, weiter bevorzugt mehr als 0.25 beträgt.

16. Verfahren nach einem der vorhergehenden Ansprüche, bei dem eine zusätzliche Faserauswahl durchgeführt wird, wobei die zusätzliche Faserauswahl nur Fasern mit einer effektiven modalen Bandbreite von mehr als einem vorbestimmten Schwellenwert enthält.

17. Verfahren nach Anspruch 16, wobei eine zusätzliche Faserauswahl durchgeführt wird, wobei die zusätzliche Faserauswahl nur Fasern mit einer effektiven modalen Bandbreite von mehr als 4700MHz-km bei 850nm hält.

**Revendications**

1. Procédé d'évaluation d'une pénalité de puissance à un taux d'erreur binaire donné d'une fibre multimode (4), comprenant au moins:

- une étape (S1) de mesure de retard en mode différentiel, consistant à mesurer un ensemble de réponses de fibres élémentaires correspondant respectivement à différentes émissions à décalage (r) de la lumière sur le rayon de coeur dans la fibre multimode (4),
- une étape (S2) consistant à générer une réponse de fibre globale en appliquant, à l'ensemble de réponses de fibres élémentaires, un ensemble de coefficients de pondération et de temporisations respectivement en fonction des différentes émissions à décalage (r) des réponses de fibres élémentaires, et
- une étape (S5) consistant à calculer un paramètre représentant une pénalité de puissance de fibre à partir de la réponse de fibre globale,

dans lequel, dans l'étape (S2) de génération d'une réponse de fibre globale, l'ensemble de coefficients de pondération comporte plusieurs sous-ensembles (W(r, 1) à W(r, 6)) de coefficients de pondération qui sont temporisés l'un par rapport à l'autre, et dans lequel au moins une temporisation relative n'est pas mise à zéro, et dans lequel les coefficients de pondération de chaque sous-ensemble dépendent respectivement des différentes émissions à décalage (r) des réponses de fibres élémentaires et dans lequel:

chaque sous-ensemble (W(r, 1) à W(r, 6)) de coefficients de pondération est appliqué, au même ensemble de réponses de fibres élémentaires, pour générer une réponse de fibre partielle, où chaque réponse de fibre correspond à un seul mode transversal d'une diode laser multimode transversal (S3), où différents sous-ensembles de coefficients de pondération correspondent à des modes transversaux différents de la diode laser, et où

une temporisation est appliquée à chaque réponse de fibre partielle correspondant à un seul mode transversal d'une source laser (S4), et

ladite réponse de fibre globale est construite comme une somme des différentes réponses de fibre partielles temporisées (S5) et dans lequel

les temporisations respectives sont calculées comme étant les produits des différences respectives entre les longueurs d'onde des modes transversaux respectifs de la source laser et la longueur d'onde centrale de la source laser multipliées par la dispersion chromatique de la fibre.

2. Procédé selon la revendication 1, dans lequel le paramètre calculé représentant une pénalité de puissance de fibre est une largeur de bande effective de la fibre multimode (4).

3. Procédé selon la revendication 1, dans lequel les coefficients de pondération et les temporisations sont tels que la Moyenne Quadratique (RMS) de la largeur de spectre de ladite source laser est supérieure à 0.2 nm, de préférence supérieure à 0.3 nm, plus préférablement supérieure à 0.4 nm, encore plus préférablement supérieure à 0.6 nm.

4. Procédé selon la revendication 1 ou 3, dans lequel la longueur d'onde centrale de la source laser est comprise dans une plage spectrale allant de 840 nm à 860 nm.

5. Procédé selon l'une des revendications 1 à 4, dans lequel une différence entre la longueur d'onde maximale et la longueur d'onde minimale de ladite source laser est supérieure à 0.6 nm, de préférence supérieure à 1 nm, plus préférablement supérieure à 1.5 nm.

6. Procédé selon l'une des revendications 1 à 5, dans lequel, une fonction de pondération (Wi) correspondant à l'interpolation, entre des coefficients de pondération discrets, d'un sous-ensemble (W(r, 1) à W(r, 6)) de coefficients de pondération, les zones (Ai) sous les fonctions de pondération respectives (Wi) sont respectivement proportionnelles aux puissances de leurs longueurs d'onde correspondantes de ladite source laser.

7. Procédé selon l'une des revendications précédentes, dans lequel ledit ensemble de coefficients de pondération comporte au moins quatre desdits sous-ensembles (W(r, 1) à W(r, 6)) de coefficients de pondération.

8. Procédé selon l'une des revendications précédentes, dans lequel ledit ensemble de coefficients de pondération comporte au plus dix desdits sous-ensembles (W(r, 1) à W(r, 6)) de coefficients de pondération.

9. Procédé selon l'une des revendications précédentes, dans lequel les coefficients de pondération (W(r, i)) ont été obtenus précédemment par optimisation numérique comportant l'itération d'étapes de calcul (S10), pour chaque mode transversal (LPxy) de lumière émise correspondant à un sous-ensemble (W(r, 1) à W(r, 6)) de coefficients de pondération, d'une différence entre les distributions de puissance de lumière émise simulée et mesurée entre les modes de fibre, effectuée jusqu'à minimisation de la somme pondérée de différences calculées, la pondération relative des différences calculées correspondant à la puissance d'émission relative des modes transversaux correspondants (LPxy) de la lumière émise.

10. Procédé selon l'une des revendications précédentes, dans lequel le paramètre représentant la pénalité de fibre est calculé plusieurs fois avec différents ensembles de coefficients de pondération et de temporisations associées correspondant à différentes sources laser, et dans lequel soit le paramètre calculé le plus défavorable est conservé, soit le paramètre le plus défavorable au percentile 5 est conservé.

11. Procédé selon l'une des revendications précédentes, dans lequel une sélection de fibres est effectuée en se basant sur la valeur dudit paramètre calculé.

12. Procédé selon la revendication 11, dans lequel ledit paramètre calculé est une largeur de bande effective, et dans lequel la sélection de fibres conserve les fibres présentant une largeur de bande effective supérieure à 3000 MHz-km à 850 nm, de préférence supérieure à 3500 MHz-km à 850 nm, plus préférablement supérieure à 4000 MHz-km à 850 nm.

13. Procédé selon l'une des revendications précédentes, dans lequel les mesures de retard en mode différentiel sont effectuées un pas de 1 $\mu$m, de préférence avec un pas de 0.5 $\mu$m.

14. Procédé selon l'une des revendications précédentes, dans lequel le rayon de coeur de fibre est supérieur à 10 $\mu$m, de préférence supérieur à 20 $\mu$m, plus préférablement supérieur à 30 $\mu$m, encore plus préférablement supérieur à 37 $\mu$m.

15. Procédé selon l'une des revendications précédentes, dans lequel l'ouverture numérique de fibre est supérieure à 0.17, de préférence supérieure à 0.185, plus préférablement supérieure à 0.25.

16. Procédé selon l'une des revendications précédentes, dans lequel une sélection supplémentaire de fibres est effectuée, la sélection supplémentaire de fibres ne conservant que des fibres présentant une largeur de bande modale effective supérieure à un seuil prédéterminé.

17. Procédé selon la revendication 16, dans lequel une sélection supplémentaire de fibres est effectuée, la sélection supplémentaire de fibres ne conservant que des fibres présentant une largeur de bande modale effective supérieure à 4700 MHz-km à 850 nm.

Fig.1

Fig.2

Fig.3

Fig.4a

Fig.4b

Fig.5

Fig.6

Fig.7a

Fig.7b

Fig.7c

Fig.7d

Fig.7e

Fig.7f

Fig.8a

Fig.8b

Fig.8c

Fig.8d

DMD MEASURING — S1

OPTICAL FIBER | RESPONSE BUILDING

S3 — PARTIAL FIBER
RESPONSES BUILDING — S2

S4 — TIME DELAYING

S5 — SUMMING UP

EFFECTIVE BANDWIDTH COMPUTING — S6

DETERMINATION OF LINK
LENGTH AND BIT RATE — S7

Fig.9

S10 — CALCULATION

S20 — WEIGHTED SUM MINIMIZATION

NO

YES

S30 — WEIGHTED COEFFICIENTS
VALIDATION

Fig.10

## REFERENCES CITED IN THE DESCRIPTION

**Patent documents cited in the description**

- EP 2144096 A

- US 20100315620 A